# NEUE EUROPÄISCHE PATENTSCHRIFT

(11) **EP 1 226 188 B2**
(45) Veröffentlichungstag und Bekanntmachung des Hinweises auf die Entscheidung über den Einspruch: **22.11.2017**
(45) Hinweis auf die Patenterteilung: 01.12.2004
(21) Anmeldenummer: 00971319.9
(22) Anmeldetag: 05.10.2000
(51) Int. Cl.: C08F 8/32, C10L 1/22, C10M 159/16

(54) **VERFAHREN ZUR HERSTELLUNG POLYISOBUTENPHENOL-HALTIGER MANNICHADDUKTE**
METHOD FOR PRODUCING MANNICH ADDUCTS THAT CONTAIN POLYISOBUTYLENE PHENOL
PROCEDE DE PREPARATION DE PRODUITS D'ADDITION DE MANNICH CONTENANT DU POLYISOBUTENPHENOL

(30) Priorität: 06.10.1999 DE 19948111
(43) Veröffentlichungstag der Anmeldung: 31.07.2002
(73) Patentinhaber: BASF SE, 67056 Ludwigshafen am Rhein (DE)
(72) Erfinder: LANGE, Arno, 67098 Bad Dürkheim (DE); RATH, Hans, Peter, 67269 Grünstadt (DE); POSSELT, Dietmar, 69120 Heidelberg (DE); TRÖTSCH-SCHALLER, Irene, 67281 Bissersheim (DE); WALTER, Marc, 67227 Frankenthal (DE)
(86) Internationale Anmeldenummer: PCT/EP2000/009746
(87) Internationale Veröffentlichungsnummer: WO 2001/025294

(56) Entgegenhaltungen:
- EP-A- 0 376 563
- EP-A- 0 831 141
- CA-A1- 2 089 833
- FR-A- 2 424 956
- US-A- 4 231 759
- US-A- 4 668 412
- US-A- 5 300 701
- US-A- 5 634 951

## Beschreibung

Die vorliegende Erfindung betrifft ein Verfahren zur Herstellung Polyisobutenphenol-haltiger Mannichaddukte, die nach diesem Verfahren erhältlichen Mannichaddukte und die Verwendung der Mannichaddukte als Detergensadditiv in Kraft- und Schmierstoffzusammensetzungen.

Vergaser und Einlasssysteme von Ottomotoren, aber auch Einspritzsysteme für die Kraftstöffdosierung, werden in zunehmendem Maße durch Verunreinigungen belastet, die durch Staubteilchen aus der Luft, unverbrannte Kohlenwasserstoffreste aus dem Brennraum und die in den Vergaser geleiteten Kurbelwellengehäuseentlüftungsgase verursacht werden.

Diese Rückstände verschieben das Luft-Kraftstoff-Verhältnis im Leerlauf und im unteren Teillastbereich, so dass das Gemisch magerer, die Verbrennung unvollständiger wird und damit die Anteile unverbrannter oder teilverbrannter Kohlenwasserstoffe im Abgas größer werden. Steigender Benzinverbrauch ist die Folge.

Es ist bekannt, dass zur Vermeidung dieser Nachteile Kraftstoffadditive zur Reinhaltung von Ventilen und Vergaser bzw. Einspritzsystemen von Ottomotoren verwendet werden (vgl. z. B.: M. Rossenbeck in Katalysatoren, Tenside, Mineralöladditive, Hrsg. J. Falbe, U. Hasserodt, S. 223, G. Thieme Verlag, Stuttgart 1978).

Eine überragende Rolle für derartige Kraftstoffadditive spielen aminoalkylierte Polyalkylenhydroxyaromaten, wie sie in der Regel durch Mannich-Reaktion von Aminen und Aldehyden mit Polyalkylensubstituierten Hydroxyaromaten zugänglich sind. Diese sogenannten Mannichaddukte fallen in der Regel als komplexe Gemische mehrerer aminhaltiger Addukte mit unterschiedlicher Reinigungsaktivität und aminfreier, in der Regel weniger reinigungsaktiver Addukte an.

Solche Mannichaddukte zeigen im Allgemeinen eine gute Reinigungswirkung, sind jedoch mit einer Reihe von Nachteilen behaftet.

Aufgrund der komplexen Zusammensetzung der Gemische beobachtet man oft eine dunkle Färbung und einen intensiven Geruch, die die Kundenakzeptanz negativ beeinflussen. Gravierender ist jedoch, dass solche herkömmlichen Mannichaddukte je nach Zusammensetzung, Kettenlänge des Polyalkylen-Teils im Molekül, nach Motortyp und nach Anwendungskonzentration des Additivs, sogenanntes Ventilstecken verursachen können, welches zum totalen Motorausfall führen kann. Unter "Ventilstecken" versteht man den vollständigen Kompressionsverlust auf einem oder mehreren Zylindern des Verbrennungsmotors, wenn - verursacht durch Polymerablagerungen am ventilschaft - die Federkräfte nicht mehr ausreichen, die Ventile ordnungsgemäß zu schließen.

So beschreiben eine Reihe von Publikationen, beispielweise die GB-A-1,368,532, die US-A-4,231,759, die US-A-5,634,951 und die US-A-5,725,612 Kraftstoffadditive auf Basis von Mannichaddukten, die aus Polyolefin-substituierten Hydroxyaromaten erhältlich sind. Bei den dort offenbarten Mannichaddukten handelt es sich ausnahmslos um solche, die durch Alkylierung von Phenolen mit niedrigreaktiven Polyolefinen und anschließender Mannich-Reaktion zugänglich sind. Solche niedrigreaktiven Polyolefine werden meist, durch Polymerisation von Olefingemischen erzeugt und weisen ein stark uneinheitliches Polymergerüst sowie einen geringen Anteil an endständigen Doppelbindungen auf. Der Einsatz von solchen niedrigreaktiven Polyolefinen zur Herstellung von Mannichaddukten führt zu niedrigen Ausbeuten im Alkylierungsschritt (kleiner 83 %, siehe z. B. US-A-5,634,951), uneinheitlichen Produktverteilungen und mäßiger Reinigungswirkung bei der Verwendung als Kraftstoffadditiv.

Demgegenüber beschreibt die EP-A-0 831 141 verbesserte Detergenzien für Kohlenwasserstofftreibstotte, die durch eine Mannich-Reaktion eines Polyisobuten-substituierten Phenols aus einem hochreaktiven Polyisobuten, das mindestens 70 % olefinische Doppelbindungen des Vinylidentyps aufweist, einem Aldehyd und Ethylendiamin erhältlich sind. Die bei der Alkylierung eingesetzten Polyisobutene weisen ein mittleres Molekulargewicht von 1 000 auf und führen zu Polyisobuten-substituierten Phenolen, die ein Verhältnis von para- zu ortho-Substitution von etwa 3:1 aufweisen. So beschreibt Beispiel 1 dieses Dokuments ein aus "hochreaktivem" Polyisobuten und Phenol im molaren Verhältnis 1:2 in Gegenwart von BF₃-Etherat hergestelltes Polyisobutenylphenol mit einem ortho/para-Verhältnis von 1:3. Die so erhaltenen Mannichaddukte fallen jedoch auch hier als komplexe und breit verteilte Gemische mit vergleichsweise geringem Stickstoffanteil an, wie aus den statt analytischer Daten angegebenen Summenparametern Stickstoffgehalt und Basenzahl deutlich wird.

Die aus dem Stand der Technik bekannten Kraft- und Schmierstoffadditive auf Basis von Mannichaddukten weisen in der Regel Gehalte an stickstoffhaltigen Verbindungen von < 50 Mol-% und sehr breite Molekulargewichtsverteilungen auf. Daher vermochten auch diese Additive auf Basis von Mannich-Produkten die bekannten Probleme, wie unerwünschte Farbigkeit, unangenehmer Geruch und vor allem das problematische Ventilstecken, nicht zu beseitigen. Zudem ist eine weitere Steigerung der Leistungsfähigkeit solcher Kraftstoff additive wünschenswert, zum einen, um mit den steigenden Anforderungen durch die fortschreitende Motorentechnik Schritt zu halten und zum anderen, um den für die erwünschte Wirkung erforderlichen Konzentrationsbereich für die Additive im Kraftstoff möglichst nach unten zu erweitern.

Aufgabe der vorliegenden Erfindung war es daher; ein Verfahren zur Herstellung von Mannich-Produkten auf Basis von Polyalkylenphenolen sowie nach diesem Verfahren erhältliche Mannich-Addukte an Polyalkylenphenole mit verbesserten Eigenschaften bereitzustellen.

Überraschend wurde nun gefunden, dass diese Aufgabe durch ein Verfahren gelöst wird, bei dem man spezielle Polyisobuten-substituierte Phenole, die durch Alkylierung von Phenolen mit hochreaktiven Polyisobutenen erhältlich sind, entweder mit Formaldehyd, Oligo- oder Polymeren des Formaldehyds in Gegenwart eines sekundären Amins oder mit einem Addukt wenigstens eines Amins an Formaldehyd, eine sonstige Formaldehydquelle oder ein Formaldehydäquivalent, umsetzt.

Insbesondere war es überraschend, dass die so erhaltenen Mannichaddukte ein deutlich verbessertes Viskositätsverhalten, insbesondere bei niedrigen Temperaturen, und eine verbesserte Detergenswirkung ohne die verbreiteten Nachteile des Standes der Technik zeigen. Die so erhaltenen Mannichaddukte weisen einen besonders hohen Anteil an stickstoffhaltigen Verbindungen und eine vergleichsweise enge Molekulargewichtsverteilung auf. Zudem wurde überraschenderweise gefunden, dass die Reinigungswirkung der Mannichaddukte im Gegensatz zur Lehre des Standes der Technik nur wenig von Art und Struktur des eingesetzten Amins abhängt. Darüber hinaus wurde gefunden, dass sich die so erhaltenen Mannichaddukte durch ein säulenchromatographisches Trennverfahren besonders einfach fraktionieren und damit weiter vereinheitlichen lassen.

Gegenstand der vorliegenden Erfindung ist daher ein Verfahren zur Herstellung Polyisobutenphenol-haltiger Mannichaddukte durch
a) Alkylierung eines Phenols mit Polyisobuten, das einen Anteil an Vinyliden-Doppelbindungen von größer 70 Mol% und ein zahlenmittleres Molekulargewicht von 300 bis 3000 aufweist, bei einer Temperatur unterhalb von etwa 50 °C in Gegenwart eines Alkylierungskatalysators;
b) Umsetzung des Reaktionsproduktes aus a) mit Formaldehyd, einem Oligomer oder einem Polymer des Formaldehyds und wenigstens einem Amin HNR⁴R⁵, wobei die Reste R⁴ und R⁵ für Methyl, Ethyl, n-Propyl, Isopropyl, n-Butyl, iso-Butyl, sek.-Butyl, tert.-Butyl, n-Pentyl oder n-Hexyl stehen,
ausgenommen ein Verfahren, bei dem man in Schritt a) folgendermaßen vorgeht:
Phenol (203.2 g, 2.16 mol) wird bei 40 °C geschmolzen und in einem 5 l Rundkolben zu Bortrifluoridetherat (73.5 ml, 0.60 mol) gegeben. Ein Polyisobuten mit einem zahlenmittleren Molekulargewicht von etwa 950 und einem Methylvinylidengehalt von etwa 82 % (1040 g, 1.09 mol) wird in Hexan (1863 ml) gelöst und die Lösung wird in den Phenol enthaltenden Kolben über einen Tropftrichter mit Druckausgleich innerhalb von 3 Stunden mit einer solchen Geschwindigkeit gegeben, dass die Temperatur des Reaktionsgemischs 22 bis 27 °C beträgt. Die Lösung wird weitere 16 Stunden bei Raumtemperatur gerührt, bevor Ammoniak (400 ml einer 30 gew.-%igen wässrigen Lösung, 2.88 mol) zugegeben wird. Wasser (1000 ml) wird hinzugefügt und das Gemisch wird gerührt. Die Lösung wird in einem 5 l Scheidetrichter in eine organische und eine wässrige Phase getrennt. Die wässrige Phase wird mit Hexan extrahiert. Es werden vier Extraktionsschritte mit jeweils 500 ml Hexan durchgeführt. Die organischen Phasen der vier Extraktionsschritte werden kombiniert und über M₉SO₄ über Nacht getrocknet und dann über eine 12 mm Celite-Schicht filtriert. Das Lösungsmittel wird bei 80 °C/23" Hg vom Filtrat am Rotationsverdampfer entfernt;
und bei dem das Amin Dimethylamin, N-Methyl-ethylamin oder Dibutylamin ist.

Geeignete Polyisobutene sind sogenannte "hochreaktive" Polyisobutene, die sich von den "niedrigreaktiven" Polyisobutenen durch den Gehalt an terminal angeordneten ethylenischen Doppelbindungen unterscheiden. Geeignete hochreaktive Polyisobutene sind Polyisobutene, die einen Anteil an Vinyliden-Doppelbindungen von größer 70 Mol-%, insbesondere größer 80 Mol-% und insbesondere größer 85 Mol-%, bezogen auf die Polyisobuten-Makromoleküle, aufweisen. Bevorzugt sind insbesondere Polyisobutene, die einheitliche Polymergerüste aufweisen. Einheitliche Polymergerüste weisen insbesondere solche Polyisobutene auf, die zu wenigstens 85 Gew.-%, vorzugsweise zu wenigstens 90 Gew.-% und besonders bevorzugt zu wenigstens 95 Gew.-% aus Isobuteneinheiten aufgebaut sind. Geeignet zur Herstellung von Kraftstoffadditiven sind insbesondere hochreaktive Polyisobutene, die ein zahlenmittleres Molekulargewicht im Bereich von 300 bis 3 000, besonders bevorzugt 400 bis 2 500 und ganz besonders bevorzugt 500 bis 1 500, aufweisen, z. B. ein zahlenmittleres Molekulargewicht von etwa 550, etwa 800, etwa 1 000 oder etwa 2 300. Vorzugsweise weisen die hochreaktiven Polyisobutene darüber hinaus eine Polydispersität von kleiner3,0, insbesondere kleiner 1,9 und besonders bevorzugt von kleiner 1,7 oder kleiner 1,5, auf. Unter Polydispersität versteht man den Quotienten aus gewichtsmittlerem Molekulargewicht M_{w} geteilt durch das zahlenmittlere Molekulargewicht M_{N}.

Besonders geeignete hochreaktive Polyisobutene sind z. B. die Glissopal® -Marken der BASF AG, insbesondere Glissopal 1000 (M_{N} = 1000) und Glissopal V 33 (M_{N} = 550) und Glissopal 2300 (M_{N} = 2 300) und deren Mischungen. Andere zahlenmittlere Molekulargewichte können nach im Prinzip bekannter Weise durch Mischen von Polyisobutenen unterschiedlicher zahlenmittlerer Molekulargewichte oder durch extraktive Anreicherung von Polyisobutenen bestimmter Molekulargewichtsbereiche eingestellt werden. Ebenso sind sie durch Direktsynthese zugänglich.

Mit solch einem hochreaktiven Polyisobuten wird nun in einem ersten Schritt (Schritt a)) ein Phenol umgesetzt (alkyliert). Geeignet für die Umsetzung mit hochreaktiven Polyisobutenen sind ganz allgemein aromatische Hydroxyverbindungen, wie unsubstituiertes Phenol und ein- oder zweifach substituierte Phenole. Die zur Alkylierung eingesetzte aromatische Hydroxyverbindung ist vorzugsweise ausgewählt unter phenolischen Verbindungen mit 1, 2 oder 3 OH-Gruppen, die gegebenenfalls wenigstens einen weiteren Substituenten aufweisen können. Als substituierte Phenole sind insbesondere einfach orthosubstituierte Phenole geeignet. Geeignete Substituenten sind z. B. C₁-C₂₀-Alkylsubstituenten, C₁-C₂₀-Alkoxysubstituenten oder ein weiterer Polyalkylenrest, insbesondere Polyalkylenreste auf Basis von hochreaktiven Polyisobutenen. Insbesondere geeignet als Substituenten sind C₁-C₇-Alkylreste, wie Methyl, Ethyl, n-Propyl, iso-Propyl, n-Butyl, sek.-Butyl, tert.-Butyl und Hexyl. Besonders geeignete alkylsubstituierte Phenole sind 2-Methylphenol und 2-Ethylphenol. Besonders bevorzugt für die Alkylierung mit Polyisobutenen ist unsubstituiertes Phenol.

Bei der Alkylierung wird das Phenol üblicherweise im Überschuss eingesetzt. Geeignet ist beispielsweise ein etwa 1,1- bis 6-facher, bevorzugt 1,6- bis 5-facher Überschuss, wie etwa ein 2-facher oder ein etwa 4-facher Überschuss des Phenols. Das erhaltene Rohprodukt wird, gegebenenfalls nach Aufreinigung, unter b) oder c) weiter umgesetzt.

In einer Ausführungsform des vorliegenden Verfahrens wird bei der Herstellung des Polyisobutenphenols das Phenol im Überschuss eingesetzt und nach erfolgter Umsetzung das Reaktionsgemisch durch Extraktion mit Lösungsmitteln, vorzugsweise polaren Lösungsmitteln, wie Wasser oder C₁-C₆-Alkanolen oder Gemische davon, durch Strippen, d. h. durch Durchleiten von Wasserdampf oder gegebenenfalls Erhitzen von Gasen, z. B. Stickstoff, oder destillativ vom überschüssigen Phenol befreit.

Die Alkylierung des Phenols wird unterhalb von etwa 50 °C, vorzugsweise unterhalb von 35 °C und insbesondere unterhalb von 25 °C, in Gegenwart eines Alkylierungskatalysators durchgeführt. In der Regel wird die Alkylierung bei Temperaturen oberhalb von - 40 °C, vorzugsweise oberhalb von -30 °C und insbesondere oberhalb von -20 °C, durchgeführt. Besonders geeignet für die Alkylierung sind Temperaturen im Bereich von -10 bis +30 °C, insbesondere im Bereich von -5 bis +25 °C und besonders bevorzugt von 0 bis +20 °C.

Geeignete Alkylierungskatalysatoren sind dem Fachmann bekannt. Geeignet sind beispielsweise Protonensäuren, wie Schwefelsäure, Phosphorsäure und organische Sulfonsäuren, z. B. Trifluormethansulfonsäure, Lewissäuren, wie Aluminiumtrihalogenide, z. B. Aluminiumtrichlorid oder Aluminiumtribromid, Bortrihalogenide, z. B. Bortrifluorid und Bortrichlorid, Zinnhalogenide, z. B. Zinntetrachlorid, Titanhalogenide, z. B. Titantetrabromid und Titantetrachlorid; und Eisenhalogenide, z. B. Eisentrichlorid und Eisentribromid. Bevorzugt sind Addukte von Bortrihalogeniden, insbesondere Bortrifluorid, mit Elektronendonoren, wie Alkoholen, insbesondere C₁-C₆-Alkanolen oder Phenolen, oder Ethern. Besonders bevorzugt ist Bortrifluoridetherat.

Die Alkylierung wird vorzugsweise in einem flüssigen Medium durchgeführt. Dazu wird das Phenol vorzugsweise in einem der Reaktanden und/oder einem Lösungsmittel, gegebenenfalls unter Erwärmen, gelöst. In einer bevorzugten Ausführungsform wird daher die Alkylierung so durchgeführt, dass das Phenol oder das substituierte Phenol zuerst unter Zufuhr von Wärme geschmolzen und anschließend mit einem geeigneten Lösungsmittel und/oder dem Alkylierungskatalysator, insbesondere dem Bortrihalogenid-Addukt, versetzt wird. Danach wird das flüssige Gemisch auf eine geeignete Reaktionstemperatur gebracht. In einer weiteren bevorzugten Ausführungsform wird das Phenol erst aufgeschmolzen und mit dem Polyisobuten und gegebenenfalls einem geeigneten Lösungsmittel versetzt. Das so erhaltene flüssige Gemisch kann auf eine geeignete Reaktionstemperatur gebracht und anschließend mit dem Alkylierungskatalysator versetzt werden.

Geeignete Lösungsmittel für die Durchführung dieser Reaktion sind beispielsweise Kohlenwasserstoffe, vorzugsweise Pentan, Hexan und Heptan, insbesondere Hexan, Kohlenwasserstoffgemische, z. B. Petroleumbenzine mit Siedebereichen zwischen 35 und 100 °C, Dialkylether, insbesondere Diethylether und halogenierte Kohlenwasserstoffe, wie Dichlormethan oder Trichlormethan, sowie Mischungen der vorgenannten Lösungsmittel.

Die Reaktion wird vorzugsweise durch die Zugabe des Katalysators oder eines der beiden Reaktanden, Phenol oder Polyisobuten, eingeleitet. Die Zugabe der die Reaktion einleitenden Komponente erfolgt vorzugsweise über einen Zeitraum von 5 bis 300 Minuten, bevorzugt 10 bis 200 und insbesondere 15 bis 180 Minuten, wobei die Temperatur des Reaktionsgemisches vorteilhaft die oben angegebenen Temperaturbereiche nicht überschreitet. Nach beendeter Zugabe lässt man das Reaktionsgemisch vorzugsweise 30 Minuten bis 24 Stunden, insbesondere 60 Minuten bis 16 Stunden, bei einer Temperatur unterhalb von 30 °C nachreagieren. Dabei werden die Reaktionsbedingungen vorzugsweise so gewählt, dass wenigstens 85 %, insbesondere wenigstens 90 % und besonders bevorzugt wenigstens 95 % des Polyisobutenphenols entstehen. Die so erhaltenen Polyisobuten-substituierten Phenole bestehen vorzugsweise (sofern es die als Edukt eingesetzte aromatische Hydroxyverbindung zulässt) zu mehr als 85 %, insbesondere mehr als 90 % und besonders bevorzugt zu mehr als 95 % aus Isomeren, deren Polyisobutenrest paraständig zur Hydroxygruppe des Phenols ist.

Vorzugsweise enthält das für die Folgeumsetzung in Schritt b) eingesetzte Alkylierungsprodukt keine oder nur geringe Mengen an nicht umgesetzten Phenolen.

Sofern die zur Alkylierung in Schritt a) eingesetzte aromatische Hydroxyverbindung Mehrfachalkylierungen zulässt, erfolgt die Reaktionsführung vorzugsweise so, dass Polyisobutenylphenole erhalten werden, die nicht oder nur zu einem geringen Anteil mehr als einfach mit dem Polyisobuten alkyliert sind. Dabei enthalten die zur Folgeumsetzung in Schritt b) eingesetzten Alkylierungsprodukte höchstens 20 Mol-%, bevorzugt höchstens 10 Mol-%, insbesondere höchstens 5 Mol-% mehr als einfach alkylierte Phenole, bezogen auf die Gesamtmenge an Alkylierungsprodukten.

Das unter a) erhaltene Reaktionsprodukt wird unter b) mit Formaldehyd, einem Oligomer und/oder einem Polymer des Formaldehyds (im Folgenden auch Formaldehydquelle genannt) und wenigstens einem Amin, das wenigstens eine sekundäre und keine primäre Aminofunktion aufweist, umgesetzt.

Diese Reaktionen werden in der Regel als Mannich- oder Mannichanaloge Reaktionen bezeichnet.

Für die Umsetzung nach b) geeignete Formaldehydquellen sind Formalinlösungen, Formaldehydoligomere, z. B. Trioxan, und Polymere des Formaldehyds, wie Paraformaldehyd. Bevorzugt wird Paraformaldehyd eingesetzt. Formalinlösung ist besonders leicht. zu handhaben. Selbstverständlich kann man auch gasförmigen Formaldehyd einsetzen.

Geeignete Amine für die Umsetzung gemäß b) weisen wenigstens eine sekundäre Aminofunktion und gegebenenfalls eine oder mehrere tertiäre Aminofunktionen auf. Wesentlich ist, dass die gemäß b) umgesetzten Amine keine primäre Aminofunktion aufweisen, da sonst größere Mengen unerwünschter Oligomerisierungsprodukte auftreten können. Primäre Aminofunktionen im Sinne dieser Erfindung sind Aminofunktionen der Formel HNR⁴R⁵, wobei einer der Reste R⁴ oder R⁵ für ein Wasserstoffatom steht und der andere Rest unter von Wasserstoff verschiedenen Substituenten ausgewählt ist. Sekundäre Aminofunktionen im Sinne dieser Erfindung sind Aminofunktionen der Formel HNR⁴R⁵, wobei die Reste R⁴ und R⁵ unter von Wasserstoff verschiedenen Substituenten ausgewählt sind. Wenn für die Umsetzung gemäß b) Amine eingesetzt werden, die keine primäre Aminofunktion und nur eine sekundäre Aminofunktion aufweisen, lassen sich weitgehend unabhängig von der Reihenfolge der Zusammengabe der Reaktanden mit hoher Selektivität stickstoffhaltige Mannichaddukte herstellen, wobei das Produktbild durch die gewählte Stöchiometrie der Komponenten Polyisobutenphenol, Amin und Formaldehydquelle leicht zu steuern ist.

Die unter b) umgesetzten sekundären Amine führen weitgehend unabhängig von der Reihenfolge des Zusammengebens der Reaktanden zur selektiven Bildung von vergleichsweise einheitlichen aminhaltigen Mannichaddukten. Dies ist vermutlich darauf zurückzuführen, dass die ausgehend von sekundären Aminen gebildeten Mannichaddukte nicht mehr mit weiterem Formaldehyd und/oder Polyisobutenphenol zu höheren Addukten (z. B. Oligo- und Polymere) reagieren können. Möglicherweise führt die in der Regel höhere Reaktivität von sekundären Aminen gegenüber Nukleophilen unabhängig von der Reihenfolge des Zusammengebens der Reaktanden zu einer vorgelagerten Bildung von Addukten aus Formaldehyd und Amin(en).

Bevorzugte Verbindungen der Formel HNR⁴R⁵ sind Dimethylamin, Diethylamin, Di-n-propylamin, Diisopropylamin. Besonders bevorzugte Verbindungen der Formel HNR⁴R⁵ sind Dimethylamin, Diethylamin und Di-n-propylamin.

Die für die Umsetzung b) geeigneten Reaktionstemperaturen hängen von einer Reihe von Faktoren ab. Bei der (Mannich-)Reaktion in Schritt b) entsteht Reaktionswasser. In der Regel wird dieses aus dem Reaktionsgemisch entfernt. Das Reaktionswasser kann während der Reaktion, am Ende der Reaktionszeit oder nach beendeter Reaktion entfernt werden, beispielsweise destillativ. Vorteilhaft lässt sich das Reaktionswasser durch Erhitzen des Reaktionsgemisches in Gegenwart von Schleppmitteln entfernen. Geeignet als Schleppmittel sind beispielsweise organische Lösungsmittel, die mit Wasser ein Azeotrop bilden und/oder einen Siedepunkt oberhalb des Siedepunktes von Wasser aufweisen.

Besonders geeignete Schleppmittel sind Paraffine, Benzol und Alkylaromaten, insbesondere Toluol, Xylole und Mischungen von Alkylaromaten mit anderen (hochsiedenden) Kohlenwasserstoffen. In der Regel wird das Entfernen des Reaktionswasser bei einer Temperatur durchgeführt, die in etwa dem Siedepunkt des Schleppmittels oder des Azeotrops aus Wasser und Schleppmittel entspricht.

Geeignete. Temperaturen für das Entfernen des Reaktionswassers liegen daher bei Normaldruck im Bereich von 75 bis 200 °C, bevorzugt 80 bis 180 °C, und besonders bevorzugt im Bereich von 80 bis 150 °C. Wird das Reaktionswasser bei vermindertem Druck entfernt, sind die Temperaturen entsprechend den erniedrigten Siedetemperaturen zu verringern.

Die Reaktionstemperaturen für die (Mannich-)Reaktion in Schritt b) liegen vorzugsweise im Bereich von 10 ° bis 200 °C, insbesondere im Bereich von 20 bis 180 °C, z. B. etwa 35 °C, etwa 90 °C, etwa 120 °C oder etwa 140 °C.

Die unter b) beschriebene Umsetzung kann beispielsweise so durchgeführt werden, dass Polyisobutenphenol, Amin und Formaldehydquelle zusammengegeben und das Reaktionsgemisch auf die gewünschte Reaktionstemperatur, vorzugsweise in den vorstehend genannten Temperaturbereichen, gebracht wird. Die unter b) beschriebene Umsetzung kann auch so durchgeführt werden, dass das Polyisobutenphenol und gegebenenfalls ein Lösungsmittel zuerst mit der Formaldehydquelle versetzt und gegebenenfalls auf die Reaktionstemperatur erwärmt wird und anschließend wenigstens ein sekundäres Amin zugegeben wird. Die Zugabe des Amins kann in einer Portion oder über einen Zeitraum vom 5 bis 300 Minuten, vorzugsweise 10 bis 150 Minuten durch mehrmaliges portionsweises Zugeben oder kontinuierliches Zugeben erfolgen. Die unter b) beschriebene Umsetzung kann auch so durchgeführt werden, dass zuerst Polyisobutenphenol und gegebenenfalls Lösungsmittel und Amin zusammengegeben, gegebenenfalls auf Reaktionstemperatur erwärmt und anschließend mit der Formaldehydquelle versetzt werden, wobei die Zugabe der Formaldehydquelle wie vorstehend für das Amin beschrieben erfolgen kann.

In einer bevorzugten Ausführungsform wird Schritt b), d. h. die (Mannich-)Reaktion und das Entfernen des Reaktionswassers etwa bei Atmosphärendruck und einer Temperatur von etwa 80 °C, etwa 110 °C oder etwa 130 °C mit aromatischen Lösungsmitteln, vorzugsweise Toluol, Xylolen oder Gemischen davon, als Schleppmittel durchgeführt. Schritt b) wird vorzugsweise so durchgeführt, dass die Reaktanden in einem Temperaturbereich zwischen 10 und 50 °C zusammengegeben werden, gegebenenfalls 10 bis 300 Minuten in diesem Temperaturbereich vermischt werden, und anschließend innerhalb von 5 bis 180 Minuten, bevorzugt 10 bis 120 Minuten, auf die zur destillativen Entfernung des Reaktionswassers erforderliche Temperatur gebracht werden.

Die Gesamtreaktionszeit für die Umsetzung der Polyisobutenphenole zu den Mannichaddukten in Schritt b) liegt im Allgemeinen zwischen 10 Minuten und 24 Stunden, vorzugsweise zwischen 30 Minuten und 16 Stunden und besonders bevorzugt zwischen 60 Minuten und 8 Stunden.

Bei der unter b) durchgeführten Mannich-Reaktion setzt man in der Regel 0,5 bis 3,0 Mol, vorzugsweise 0,5 bis 2,0 Mol und insbesondere 0,8 bis 1,5 Mol Formaldehyd (bzw. eine entsprechende Menge einer Formaldehydquelle), sowie 0,5 bis 3,0 Mol, vorzugsweise 0,5 bis 2,0 Mol und insbesondere 0,8 bis 1,5 Mol sekundäres Amin, bezogen auf 1 Mol Polyisobutenphenol aus a), ein.

Besonders bevorzugt werden die Reaktanden Formaldehydquelle, sekundäres Amin und Polyisobutenphenol in Schritt b) in einem etwa äquimolaren Verhältnis oder einem Verhältnis von etwa 2:2:1 oder im Verhältnis von etwa 1:2:1 eingesetzt. Damit lässt sich in der Regel ein weitgehend einheitliches Produktbild mit einem hohen Anteil an aminhaltigen Verbindungen erreichen. Dabei führen ein etwa äquimolares Verhältnis der Reaktanden und ein 1:2:1-Verhältnis der Reaktanden zur bevorzugten Bildung von mono-aminomethylierten Verbindungen. Ein Verhältnis der Reaktanden von etwa 2:2:1 führt zur bevorzugten Bildung von bisaminomethylierten Verbindungen.

Mittels der vorstehend unter b) beschriebenen Vorgehensweisen kann das Polyisobutenphenol durch Wahl der Stöchiometrie zu bisaminomethylierten Mannichaddukten umgesetzt werden. Zur Herstellung der Bisaddukte werden vorzugsweise Formaldehyd (bzw. Formaldehydquelle oder Formaldehydäquivalent) oder und Amine bzw. Imine, Aminale oder Halbaminale im zwei- bis dreifachen Überschuss eingesetzt und gegebenenfalls die Reaktionszeit verlängert.

In einer weiteren bevorzugten Ausführungsform der Umsetzung des erhaltenen Reaktionsproduktes wird zuerst das Polyisobutenphenol aus Schritt a) und gegebenenfalls Lösungsmittel vorgelegt. Anschließend gibt man langsam, beispielsweise durch Zutropfen, etwa äquimolare Mengen einer Formaldehydquelle und eines Amins mit ausschließlich einer sekundären Aminofunktion, und gegebenenfalls Lösungsmittel zu. Anschließend vermischt man die Komponenten noch weitere 20 Minuten bis 3 Stunden, vorzugsweise 30 bis 90 Minuten, und erhitzt die Mischung anschließend für weitere 30 Minuten bis 4 Stunden, vorzugsweise 1 Stunde bis 3 Stunden, auf eine Temperatur im Bereich von 40 bis 100 °C, vorzugsweise 50 bis 90 °C. Das Reaktionsgemisch kann anschließend gereinigt werden, beispielsweise durch Filtrieren und/oder Entfernen der flüchtigen Bestandteile im Vakuum oder durch Destillation. Geeignet als Lösungsmittel sind insbesondere die bei den vorstehend beschriebenen bevorzugten Ausführungsformen genannten Lösungsmittel. Bevorzugt ist Isopropanol.

In einer weiteren bevorzugten Ausführungsform werden Polyisobutenphenol und eine etwa äquimolare Menge sekundäres Amin mit ausschließlich einer sekundären Aminogruppe, in Lösungsmittel vorgelegt. Anschließend gibt man langsam eine etwa äquimolare Menge einer Formaldehydquelle zu. Vorzugsweise erwärmt man das Reaktionsgemisch während der Zugabe der Formaldehydquelle auf eine Temperatur im Bereich von 30 bis 70, bevorzugt 40 bis 60 °C. Anschließend wird das Reaktionsgemisch für 1 bis 6 Stunden, bevorzugt 2 bis 4 Stunden, auf eine Temperatur im Bereich von 80 bis 130 °C, bevorzugt 90 bis 120 °C und besonders bevorzugt bis zum Rückfluss des Lösungsmittels erhitzt. Dabei wird vorzugsweise das gebildete Reaktionswasser destillativ entfernt. Als Lösungsmittel für diese Ausführungsform sind insbesondere aromatische Lösungsmittel oder deren Gemische mit hochsiedenden weiteren Kohlenwasserstoffen geeignet. Besonders geeignet sind Xylole und Toluol und deren Gemische, bevorzugt ist Toluol.

Gewünschtenfalls können die nach den erfindungsgemäßen Verfahren erhaltenen Produkte weiter gereinigt werden, z. B. extraktiv, destillativ oder säulenchromatographisch, insbesondere wie nachstehend beschrieben.

Nach einer bevorzugten Ausführungsform enthalten die durch das erfindungsgemäße Verfahren erhältlichen Mannichaddukte keine oder geringe Mengen an nicht weiter umgesetzten Alkylierungsprodukten aus Reaktionsschritt a). Da die Mannichreaktion eine Gleichgewichtsreaktion ist, enthält das Produkt im Normalfall einen Restanteil an Alkylierungsprodukten aus Reaktionsschritt a). Üblicherweise beträgt der Anteil der Mannichaddukte an nicht umgesetzten Polyisobutenylphenolen 0 bis 20 Mol-%, meist 1 bis 15 Mol-%, insbesondere 5 bis 10 Mol-%, bezogen auf die Gesamtmenge des erhaltenen Adduktgemischs. Eine Einstellung des erwünschten Anteils an Polyisobutenylphenolen kann über die Reaktionsführung der Schritte b) und c) oder übliche Trennverfahren erfolgen. Ein bevorzugtes Trennverfahren ist die im Folgenden beschriebene Säulenchromatographie. Da jedoch überraschenderweise ein Restanteil an nicht weiter umgesetzten Alkylierungsprodukten nicht störend und vielfach sogar vorteilhaft ist, kann im Allgemeinen sowohl auf aufwendige Verfahrensmaßnahmen für eine möglichst vollständige Umsetzung in Schritt b) als auch auf weitere Trennschritte verzichtet werden.

Die oben beschriebenen Mannichadduktgemische, insbesondere ihre stickstoffhaltigen Bestandteile, können durch Säulenchromatographie an stationären Phasen fraktioniert werden. Die Fraktionierung kann mittels einstufiger oder mehrstufiger Elution erfolgen. Geeignete Eluenten sind beispielsweise Kohlenwasserstoffe, Alkohole, Ketone, Wasser und Gemische davon, denen gegebenenfalls Basen, z. B. Amine oder Alkalien, zugesetzt werden können. Die Fraktionierung kann Vorteilhaft durch mehrstufiges Eluieren, vorzugsweise mit wenigstens einem Kohlenwasserstoff und anschließend wenigstens einem basischen Alkohol-Wasser-Gemisch erfolgen.

Als stationäre Phasen kommen insbesondere Oxide, wie sie in der Säulenchromatographie üblich sind, in Frage. Bevorzugt werden saure Oxide, wie saures Aluminiumoxid und besonders bevorzugt saures Kieselgel. Vorzugsweise wird als basisches Alkohol-Wasser-Gemisch ein Gemisch aus
a) 75 bis 99,5 Gew.-%, insbesondere 85 bis 98 Gew.-% und besonders bevorzugt 90 bis 97 Gew.-%, wenigstens eines C₂-C₄-Alkohols, insbesondere Ethanol und/oder Isopropanol, besonders bevorzugt Isopropanol,
b) 0,4 bis 24,4 Gew.-% Wasser und
c) 0,1 bis 15 Gew.-%, insbesondere 0,5 bis 10 Gew.-% und besonders bevorzugt 1 bis 5 Gew.-%, wenigstens eines bei Raumtemperatur flüchtigen Amins eingesetzt wird.

Geeignete, bei Raumtemperatur flüchtige Amine sind beispielsweise Ammoniak, Mono-C₁-C₈-alkylamine, Di-C₁-C₆-alkylamine und Tri-C₁-C₄-alkylamine, insbesondere Ammoniak, Methylamin, Ethylamin, n-Propylamin, Isopropylamin, Dimethylamin, Diethylamin, Di-n-propylamin, Diisopropylamin, Di-n-butylamin, Di-sec.-butylamin, Di-tert.-butylamin, Trimethylamin, Triethylamin, Diisopropylethylamin und Triisopropylamin. Besonders bevorzugt ist Ammoniak.

In der Regel wird die Fraktionierung durch Säulenchromatographie so durchgeführt, dass das Adduktgemisch auf eine mit einer stationären Phase gefüllte und gegebenenfalls konditionierte Säule gegeben wird. Gegebenenfalls kann anschließend in einem ersten Schritt die Säule mit dem aufgegebenen Adduktgemisch mit einem unpolaren Lösungsmittel, z. B. aliphatischen oder aromatischen Kohlenwasserstoffen, gespült werden. Dadurch lassen sich beispielsweise nicht aminhaltige Fraktionen eluieren. Die Fraktionierung des Adduktgemischs, insbesondere der aminhaltigen Komponenten, erfolgt durch vorzugsweise mehrstufiges Eluieren mit einem wie oben beschriebenen Alkohol-Wasser-Gemisch. Dabei kann die Elution sowohl mit einem Alkohol-Wasser-Gemisch konstanter Zusammensetzung oder variabler Zusammensetzung, z. B. durch einen ein oder mehrstufigen Stufengradienten oder kontinuierlichen Gradienten, erfolgen.

Das wie oben beschriebene Verfahren kann zum einen zum Abtrennen der nicht-aminhaltigen Bestandteile des Adduktgemisches und anschließendes Wiedergewinnen der unfraktionierten aminhaltigen Bestandteile des Adduktgemisches verwendet werden. Zum anderen werden gegebenenfalls erst die nicht stickstoffhaltigen Bestandteile des Adduktgemisches abgetrennt und anschließend die stickstoffhaltigen Bestandteile fraktioniert. Bei geeigneter Trennleistung der verwendeten Säule lassen sich die Adduktgemische gewünschtenfalls bis zu den Einzelverbindungen fraktionieren.

Vorzugsweise sind nach dem erfindungsgemäßen Verfahren Adduktgenische mit einer Polydispersität im Bereich von 1,05 bis 3,5, insbesondere 1,1 bis 2,5 und besonders bevorzugt 1,1 bis 1,9, erhältlich.

Die Einstellung der gewünschten Polydispersität kann durch gezielte Auswahl der Einsatzstoffe, Wahl der Stöchiometrie, Wahl der Temperatur und Reaktionszeit sowie gegebenenfalls der Aufarbeitung, insbesondere durch übliche Reinigungstechniken, wie Extrahieren und Destillieren und gegebenenfalls die erfindungsgenäße Fraktionierung durch Säulenchromatographie erreicht werden.

Geeignete Maßnahmen, die einzeln oder in Kombination die Bildung von Adduktgemischen mit erhöhter Wirksamkeit und/oder geringer Polydispersität begünstigen, sind beispielsweise ausgewählt unter
- Verwendung von Polyisobutenen niedriger Polydispersität,
- Verwendung von Polyisobutenen mit möglichst hohen Anteilen an terminalen Doppelbindungen,
- Einsatz der Polyisobutene im Unterschuss bei der Alkylierung der Phenole, gegebenenfalls gefolgt von einer anschließenden Abtrennung des unumgesetzten Phenols,
- Durchführen der Alkylierung bei einer möglichst geringen Temperatur, die dennoch einen vollständigen Umsatz gewährleistet, z. B. oberhalb von etwa +5 °C und unterhalb von etwa +30 °C,
- Einhaltung einer geeigneten Stöchiometrie; z. B. ein Verhältnis von Formaldehydquelle:Amin:Polyisobutenphenol von etwa 1:1:1 oder etwa 1:2:1 (zur Herstellung von Mono-Mannichaddukten) oder 2:2:1 (zur Herstellung von Bis-Mannichaddukten) oder 2:1:1 (führt beim Einsatz von primären Aminen zur Bildung von Oxazinen) oder 2:1:2, wobei im letzten Fall vorzugsweise ein primäres Amin eingesetzt wird (führt zur Herstellung von Bisarylmonoaminen),
- Abtrennung der nicht aminhaltigen Addukte aus dem Gemisch durch säulenchromatographische Fraktionierung,
- Fraktionierung der aminhaltigen Addukte des Gemisches durch Säulenchromatographie, vorzugsweise an sauren stationären Phasen durch Eluation mit basischen Alkohol-Wasser-Gemischen.

Die oben definierten Mannichaddukte eignen sich als Detergensadditiv in Kraft- und Schmierstoffzusammensetzungen, gegebenenfalls in Kombination mit weiteren üblichen Kraft- und Schmierstoffadditiven und insbesondere mit den nachfolgend beschriebenen zusätzlichen Komponenten.

Als Beispiele für solche zusätzlichen Komponenten sind weitere Additive mit Detergenswirkung oder mit ventilsitzverschleißhemmender Wirkung zu nennen, wobei diese mindestens einen hydrophoben Kohlenwasserstoffrest mit einem zahlengemittelten Molekulargewicht (M_{N}) von 85 bis 20 000 und mindestens eine polare Gruppierung, ausgewählt aus
(a) Mono- oder Polyaminogruppen mit bis zu 6 Stickstoffatomen, wobei mindestens ein Stickstoffatom basische Eigenschaften hat,
(b) Nitrogruppen, gegebenenfalls in Kombination mit Hydroxylgruppen,
(c) Hydroxylgruppen in Kombination mit Mono- oder Poiyaminogruppen, wobei mindestens ein Stickstoffatom basische Eigenschaften hat,
(d) Carboxylgruppen oder deren Alkalimetall- oder Erdalkalimetalisalzen,
(e) Sulfonsäuregruppen oder deren Alkalimetall- oder Erdalkalimetallsalzen,
(f) Polyoxy-C₂- bis C₄-alkylengruppierungen, die durch Hydroxylgruppen, Mono- oder Polyaminogruppen, wobei mindestens ein Stickstoffatom basische Eigenschaften hat, oder durch Carbamatgruppen terminiert sind,
(g) Carbonsäureestergruppen,
(h) aus Bernsteinsäureanhydrid abgeleitete Gruppierungen mit Hydroxy- und/oder Amino- und/oder Amido- und/ oder Imidogruppen und
(i) durch herkömmliche Mannich-Umsetzung von phenolischen Hydroxylgruppen mit Aldehyden und Mono- oder Polyaminen erzeugte Gruppierungen
aufweisen.

Als Beispiele für obige Additivkomponenten mit Detergenswirkung oder mit ventilsitzverschleißhemmender Wirkung seien zu nennen:

Mono- oder Polyaminogruppen (a) enthaltende Additive sind vorzugsweise Polyalkenmono- oder Polyalkenpolyamine auf Basis von Polypropen oder von hochreaktivem (d. h. mit überwiegend endständigen Doppelbindungen - meist in der β- und γ-Position) oder konventionellem (d. h. mit überwiegend mittenständige Doppelbindungen) Polybuten oder Polyisobuten mit M_{N} = 300 bis 5 000, die nicht nach dem erfindungsgemäßen Verfahren erhalten wurden. Derartige Additive auf Basis von hochreaktivem Polyisobuten, welche aus dem Polyisobuten, welches bis zu 20 Gew.-% n-Buten-Einheiten enthalten kann, durch Hydroformylierung und reduktive Aminierung mit Ammoniak, Monoaminen oder Polyaminen wie Dimethylaminopropylamin, Ethylendiamin, Diethylentriamin, Triethylentetramin oder Tetraethylenpentamin hergestellt werden können, sind insbesondere aus der EP-A 244 616 bekannt. Geht man bei der Herstellung der Additive von Polybuten oder Polyisobuten mit überwiegend mittenständigen Doppelbindungen (meist in der β- und γ-Position) aus, bietet sich der Herstellweg durch Chlorierung und anschließende Aminierung oder durch Oxidation der Doppelbindung mit Luft oder Ozon zur Carbonyl- oder Carboxylverbindung und anschließende Aminierung unter reduktiven (hydrierenden) Bedingungen an. Zur Aminierung können hier die gleichen Amine wie oben für die reduktive Aminierung des hydroformylierten hochreaktiven Polyisobutens eingesetzt werden. Entsprechende Additive auf Basis von Polypropen sind insbesondere in der WO-A 94/24231 beschrieben.

Weitere bevorzugte Monoaminogruppen (a) enthaltende Additive sind die Hydrierungsprodukte der Umsetzungsprodukte aus Polyisobutenen mit einem mittleren Polymerisationsgrad P = 5 bis 100 mit Stickoxiden oder Gemischen aus Stickoxiden und Sauerstoff, wie sie insbesondere in WO-A 97/03946 beschrieben sind.

Weitere bevorzugte Monoaminogruppen (a) enthaltende Additive sind die aus Polyisobutenepoxiden durch Umsetzung mit Aminen und nachfolgende Dehydratisierung und Reduktion der Aminoalkohole erhältlichen Verbindungen, wie sie insbesondere in DE-A 196 20 262 beschrieben sind.

Nitrogruppen, gegebenenfalls in Kombination mit Hydroxylgruppen, (b) enthaltende Additive sind vorzugsweise Umsetzungsprodukte aus Polyisobutenen des mittleren Polymerisationsgrades P = 5 bis 100 oder 10 bis 100 mit Stickoxiden oder Gemischen aus Stickoxiden und Sauerstoff, wie sie insbesondere in WO-A 96/03367 und WO-A 96/03479 beschrieben sind. Diese Umsetzungsprodukte stellen in der Regel Mischungen aus reinen Nitropolyisobutanen (z. B. α,β-Dinitropolyisobutan) und gemischten Hydroxynitropolyisobutanen (z. B. α-Nitro-β-hydroxypolyisobutan) dar.

Hydroxylgruppen in Kombination mit Mono- oder Polyaminogruppen (c) enthaltende Additive sind insbesondere Umsetzungsprodukte von Polyisobutenepoxiden, erhältlich aus vorzugsweise überwiegend endständige Doppelbindungen aufweisendem Polyisobuten mit M_{N} = 300 bis 5 000, mit Ammoniak, Mono- oder Polyaminen, wie sie insbesondere in EP-A 476 485 beschrieben sind.

Carboxylgruppen oder deren Alkalimetall- oder Erdalkalimetallsalze (d) enthaltende Additive sind vorzugsweise Copolymere von C₂-C₄₀-Olefinen mit Maleinsäureanhydrid mit einer Gesamt-Molmasse von 500 bis 20 000, deren Carboxylgruppen ganz oder teilweise zu den Alkalimetall- oder Erdalkalimetallsalzen und ein verbleibender Rest der Carboxylgruppen mit Alkoholen oder Aminen umgesetzt sind. Solche Additive sind insbesondere aus der EP-A 307 815 bekannt. Derartige Additive dienen hauptsächlich zur Verhinderung von Ventilsitzverschleiß und können, wie in der WO-A 87/01126 beschrieben, mit Vorteil in Kombination mit üblichen Kraftstoffdetergenzien wie Poly(iso)butenaminen oder Polyetheraminen eingesetzt werden.

Sulfonsäuregruppen oder deren Alkalimetall- oder Erdalkalimetallsalze (e) enthaltende Additive sind vorzugsweise Alkalimetalloder Erdalkalimetallsalze eines Sulfobernsteinsäurealkylesters, wie er insbesondere in der EP-A 639 632 beschrieben ist. Derartige Additive dienen hauptsächlich zur Verhinderung von Ventilsitzverschleiß und können mit Vorteil in Kombination mit üblichen Kraftstoffdetergenzien wie Poly(iso)butenaminen oder Polyetheraminen eingesetzt werden.

Polyoxy-C₂- bis C₄-alkylengruppierungen (f) enthaltende Additive sind vorzugsweise Polyether oder Polyetheramine, welche durch Umsetzung von C₂- bis C₆₀-Alkanolen, C₆- bis C₃₀-Alkandiolen, Monooder Di-C₂-C₃₀-alkylaminen, C₁-C₃₀-Alkylcyclohexanolen oder C₁-C₃₀-Alkylphenolen mit 1 bis 30 mol Ethylenoxid und/oder Propylenoxid und/oder Butylenoxid pro Hydroxylgruppe oder Aminogruppe und, im Falle der Polyetheramine, durch anschließende reduktive Aminierung mit Ammoniak, Monoaminen oder Polyaminen erhältlich sind. Derartige Produkte werden insbesondere in EP-A 310 875, EP-A 356 725, EP-A 700 985 und US-A 4 877 416 beschrieben. Im Falle von Polyethern erfüllen solche Produkte auch Trägeröleigenschaften. Typische Beispiele hierfür sind Tridecanol- oder Isotridecanolbutoxylate, Isononylphenolbutoxylate sowie Polyisobutenolbutoxylate und -propoxylate sowie die entsprechenden Umsetzungsprodukte mit Ammoniak.

Carbonsäureestergruppen (g) enthaltende Additive sind vorzugsweise Ester aus Mono-, Di- oder Tricarbonsäuren mit langkettigen Alkanolen oder Polyolen, insbesondere solche mit einer Mindestviskosität von 2 mPas bei 100 °C, wie sie insbesondere in DE-A 38 38 918 beschrieben sind. Als Mono-, Di- oder Tricarbonsäuren können aliphatische oder aromatische Säuren eingesetzt werden, als Esteralkohole bzw. -polyole eignen sich vor allem langkettige Vertreter mit beispielsweise 6 bis 24 C-Atomen. Typische Vertreter der Ester sind Adipate, Phthalate, iso-Phthalate, Terephthalate und Trimellitate des iso-Octanols, iso-Nonanols, iso-Decanols und des iso-Tridecanols. Derartige Produkte erfüllen auch Trägeröleigenschaften.

Aus Bernsteinsäureanhydrid abgeleitete Gruppierungen mit Hydroxyund/oder Amino- und/oder Amido- und/oder Imidogruppen (h) enthaltende Additive sind vorzugsweise entsprechende Derivate von Polyisobutenylbernsteinsäureanhydrid, welche durch Umsetzung von konventionellem oder hochreaktivem Polyisobuten mit M_{N} = 300 bis 5 000 mit Maleinsäureanhydrid auf thermischen Wege oder über das chlorierte Polyisobuten erhältlich sind. Von besonderem Interesse sind hierbei Derivate mit aliphatischen Polyaminen wie Ethylendiamin, Diethylentriamin, Triethylentetramin oder Tetraethylenpentamin. Derartige Ottokraftstoffadditive sind insbesondere in US-A4 849 572 beschrieben.

Durch herkömmliche Mannich-Umsetzung von phenolischen Hydroxylgruppen mit Aldehyden und Mono- oder Polyaminen erzeugte Gruppierungen (i) enthaltende Additive sind vorzugsweise Umsetzungsprodukte von polyisobutensubstituierten Phenolen mit Formaldehyd und primären Mono- oder Polyaminen wie Ethylendiamin, Diethylentriamin, Triethylentetramin, Tetraethylenpentamin oder Dimethylaminopropylamin. Derartige "Polyisobuten-Mannichbasen" sind insbesondere in der EP-A 831 141 beschrieben. Zur genaueren Definition der einzelnen aufgeführten Ottokraftstoffadditive wird hier auf die Offenbarungen der obengenannten Schriften des Standes der Technik ausdrücklich Bezug genommen.

Als Lösungs- oder Verdünnungsmittel (bei Bereitstellung von Additivpaketen) kommen aliphatische und aromatische Kohlenwasserstoffe, z. B. Solvent Naptha, in Betracht.

Weitere übliche Additivkomponenten, die mit den erfindungsgemäßen Additiven kombiniert werden können, sind beispielsweise Korrosionsinhibitoren, wie z. B. auf Basis von zur Filmbildung neigenden Ammoniumsalzen organischer Carbonsäuren oder von heterocyclischen Aromaten, Antioxidantien oder Stabilisatoren, beispielsweise auf Basis von Aminen wie p-Phenylendiamin, Dicyclohexylamin oder Derivaten davon oder von Phenolen wie 2,4-Di-tert.-butylphenol oder 3,5-Di-tert.-butyl-4-hydroxyphenylpropionsäure, Demulgatoren, Antistatikmittel, Metallocene wie Fer-Additivkonzentrate, insbesondere Kraftstoffadditiv-Konzentrate und Schmierstoffadditiv-Konzentrate, besonders bevorzugt Kraftstoffadditiv-Konzentrate, auf der Basis der erfindungsgemäß hergestellten Mannichaddukte, enthalten, neben üblichen Additivkomponenten obiger Definition, wenigstens ein erfindungsgemäßes Mannichaddukt in Anteilen von 0,1 bis 99,9 Gew.-%, bevorzugt 0,5 bis 80 Gew.-%, insbesondere 1,0 bis 60 Gew.-%, bezogen auf das Gesamtgewicht des Konzentrats.

Kraftstoffzusammensetzungen, vor allem Ottokraftstoffzusammensetzungen, enthalten die erfindungsgemäß hergestellten Mannichaddukte, insbesondere Mannichaddukte der Formel I, in wirksamen Mengen. Unter wirksamen Mengen sind in der Regel bei Kraftstoffzusammensetzungen 10 bis 5 000 Gew.-ppm und insbesondere 50 bis 2 000 Gew.-ppm, bezogen auf die Gesamtmenge der Kraftstoffzusammensetzung, zu verstehen. Schmierstoffzusammensetzungen auf Basis der erfindungsgemäß hergestellten Mannichaddukte enthalten bevorzugt 0,1 bis 10 Gew.-%, insbesondere 0,5 bis 5 Gew.-%, bezogen auf die Gesamtmenge der Schmierstoffzusammensetzung, der erfindungsgemäßen Mannichaddukte. Die erfindungsgemäß hergestellten Polyisobutenphenol-haltigen Mannichaddukte weisen eine hohe Einheitlichkeit, eine enge Molekulargewichtsverteilung und/oder einen hohen Anteil an Amin-haltigen Verbindungen auf. Sie zeigen, wie im folgenden experimentellen Teil weiter veranschaulicht, eine ausgezeichnete Wirkung als ventilreinigende und ventilreinhaltende Ottokraftstoffdetergenzien. Daneben weisen sie die eingangs geschilderten Nachteile der aus dem Stand der Technik bekannten Polyalkylenphenol-Mannichaddukt-Gemischen nicht auf. Sie zeigen darüber hinaus ein sehr günstiges Viskositätsverhalten, insbesondere in der Kälte, das Formulierungs- und Anwendungsproblemen, wie z. B. Ventilstecken, vorbeugt.

### Beispiele

Die Charakterisierung der Alkylierungsprodukte und der Mannichaddukte erfolgte mittels ¹H-NMR-Spektroskopie. Bei den Mannichaddukten sind zum Teil nur die chemischen Verschiebungen (δ in ppm) der charakteristischen Signale der Methylenprotonen der Aminomethylengruppe wiedergegeben.

### I. Herstellung der Polyisobutenphenole

### Ia. Alkylierung mit einem Poylisobuten mit M_{N} = 550

In einem 4 1-Vierhalskolben wurden 404,3 g Phenol in einer Stickstoffatmosphäre bei 40 bis 45 °C aufgeschmolzen. Man tropfte 191 g BF₃-Diethyletheraddukt zu und kühlte auf 10 °C. 1 100 g Polyisobuten mit M_{N} = 550 und einem Dimethylvinylidenanteil von 85 %, gelöst in 1 000 ml Hexan, wurden innerhalb von 150 Minuten bei 5 bis 10 °C zugetropft. Innerhalb von 4 Stunden ließ man auf Raumtemperatur erwärmen und rührte über Nacht nach. Die Reaktion wurde durch Zugabe von 1 200 ml 25 %iger Ammoniaklösung beendet.

Die organische Phase wurde abgetrennt und danach 8-mal mit 500 ml Wasser gewaschen, über NaSO₄ getrocknet und das Lösungsmittel sowie geringe Phenolmengen im Vakuum entfernt: 1 236 g Öl (Polyisobutenphenol). ¹H-NMR: 7,2 ppm (Dublett, 2H), 6,7 ppm (Dublett, 2H), 4,8 ppm (Singulett, 1H), 1,75 ppm (Singulett, 2H), 1,5-0,5 ppm (Singuletts, 78H).

Das entspricht einem M_{N} des Alkylrests von 550. Im Signalbereich von 7,1-6,75 ppm befinden sich kleine Signale, die auf die Bildung von 5 bis 10 % 2- oder 2,4-substituiertem Phenol hindeuten.

### Ib. Alkylierung mit einem Polyisobuten mit M_{N} = 1 000

In einem 4 1-Vierhalskolben wurden 203,9 g Phenol unter Stickstoff bei 40 bis 45 °C aufgeschmolzen. Man tropfte 95,5 g BF₃-Diethyletheraddukt zu und kühlte auf 20 bis 25 °C. 998 g Polyisobuten mit M_{N} = 1 000 und einem Dimethylvinylidenanteil von 85 %, gelöst in 1 800 ml Hexan, wurden innerhalb von 3 Stunden bei 20 bis 25°C zugetropft. Man rührte über Nacht nach. Anschließend wurde die Reaktion durch Zugabe von 500 ml 25 %iger Ammoniaklösung beendet. Die organische Phase wurde abgetrennt und anschließend 7-mal mit 500 ml Wasser gewaschen, über NaSO₄ getrocknet und das Lösungsmittel im Vakuum entfernt: 1 060 g Öl (Polyisobutenphenol).
¹H-NMR: 7,2 ppm (Dublett, 2H), 6,7 ppm (Dublett, 2H), 4,8 ppm (Singulett, breit 1H), 1,75 ppm (Singulett, 2H), 1,5-0,5 ppm (Singuletts, 165H).

Dies entspricht einem M_{N} des Alkylrests von 1 150. Im Bereich von 7,1 bis 6,75 befinden sich kleine Signale, die dafür sprechen, dass neben dem Hauptprodukt (para-Polyisobutenphenol) 5 bis 10 % 2,4-substituiertes Phenol entstanden sind, was im Einklang mit der gefundenen geringen Molekulargewichtserhöhung steht.

### Ic.

In einem 4 1-Vierhalskolben wurden 76,1 g Phenol unter Stickstoff bei 40 bis 45 °C aufgeschmolzen. Man tropfte 28,4 g BF₃-Diethyletheraddukt zu und kühlte auf 20 bis 2 °C. 914,5 g Polyisobuten mit M_{N} = 2 300 und einem Dimethylvinylidenanteil von 85 %, gelöst in 1 000 ml Hexan, wurden innerhalb von 3 Stunden bei 20 bis 30 °C zugetropft. Man rührte über Nacht nach. Anschließend wurde die Reaktion durch Zugabe von 500 ml 25 %iger Ammoniaklösung beendet. Die organische Phase wurde abgetrennt und anschließend 7-mal mit 500 ml Wasser gewaschen, über NaSO₄ getrocknet und das Lösungsmittel im Vakuum entfernt: 912 g Öl (Polyisobutenphenol).
¹H-NMR: 7,2 ppm (Dublett, 2H), 6,7 ppm (Dublett, 2H), 4,8. ppm (Singulett, breit 1H), 1,75 ppm (Singulett, 2H), 1,5-0,5 ppm (Singuletts, 330H).

Dies entspricht einem M_{N} des Alkylrests von 2 310.

### II. Umsetzung der Polyisobutenphenole zu Mannichaddukten

### IIa.

In einem 4 1-Vierhalskolben mit Wasserabscheider wurden 320 g PIB-Phenol aus Beispiel Ia in 200 ml Toluol vorgelegt. Man setzte 43,9 g Morpholin zu und tropfte bei 50 °C unter Stickstoff als Schutzgas 40,9 g 37 %ige Formalinlösung zu. Danach wurde das Reaktionsgemisch bis zum Rückfluss des Lösungsmittels erhitzt und 3 Stunden lang Wasser ausgekreist (destillativ entfernt). Die Lösung wurde filtriert und das Lösungsmittel im Vakuum entfernt: 352 g Öl (Mannichaddukt).
¹H-NMR: 7,1 ppm (Dublett, Feinaufspaltung, 1H), 6,9 ppm (Singulett, Feinaufspaltung, 1H), 6,7 ppm (Dublett, 1H), 3,8 ppm (4 Multiplett, 4H), 3,7 ppm (Singulett, 2B), 2,5 ppm (Singulett, breit, 4H), 1,75 ppm (Singulett, 2H), 1,5-0,5 ppm (Singuletts, 135H).

### IIb.

In einem 1 1-Vierhalskolben mit Wasserabscheider wurden 260 g Polyisobutenphenol aus Beispiel Ia vorgelegt. Anschließend tropfte man 12,6 g Paraformaldehyd und 74,8 g Di[3-(dimethylamino)-npropyl)amin in 100 ml Isopropanol zu, wobei die Temperatur des Reaktionsgemischs auf 38 °C anstieg. Man rührte das Reaktionsgemisch 1 Stunde und erhitzte das Reaktionsgemisch anschließend für 2 Stunden unter Rückfluss. Die Reaktionslösung wurde filtriert und das Lösungsmittel im Vakuum entfernt: 332 g Öl (Mannichaddukt).
¹H-NMR: 7,1 ppm (Dublett, Feinaufspaltung, 1H), 6,9 ppm (Singulett, Feinaufspaltung, 1H), 6,6 ppm (Dublett, 1H), 3,7 ppm (Singulett, 1,5H), 3,7-3,2 ppm (3 Singuletts, 0,5H), 2,5 ppm (Triplett, 4H), 2,2 ppm (Triplett, 4H), 2,1 ppm (Singulett, 12H), 1,75 ppm (Singulett, 2H), 1,7 ppm (Multiplett, 4H), 1,5-0,5 ppm (Singuletts, 78H).

Diese integrale entsprechen einem Molekulargewicht M_{N} des Alkylrestes von 546.

### IIc. (nicht erfindungsgemäß)

In einem 500 ml-Vierhalskolben wurden 7,5 ml 37 %ige Formalinlösung in 30 ml Tetrahydrofuran vorgelegt. Anschließend wurde 3-(Dimethylamino)-n-propylamin bei einer Temperatur zwischen 20 und 25 °C zugegeben. Man rührte weitere 30 Minuten bei dieser Temperatur und setzte anschließend 120 g Polyisobutenphenol aus Beispiel Ia zu. Anschließend wurde das Reaktionsgemisch 2 Stunden unter Rückfluss erhitzt. Die erhaltene Reaktionslösung wurde filtriert und das Lösungsmittel im Vakuum entfernt: 116 g Öl (Mannichaddukt).
¹H-NMR: 7,1 ppm (Dublett, Feinaufspaltung, 1H), 6,9 ppm (Singulett, Feinaufspaltung, 1H), 6,6 ppm (Dublett, 1H), 3,9 ppm (Singulett, 2H), 2,5 ppm (Triplett, 2H), 2,2 ppm (Triplett, 2H), 2,1 ppm (Singulett, 4,5H), 1,75 ppm (Singulett, 2H), 1,7 ppm (Multiplett, 2H), 1,5-0,5 ppm (Singuletts, 141H).

### IId. (nicht erfindungsgemäß)

In einem 500 ml-Vierhalskolben wurden 105 g Polyisobutenphenol aus Beispiel Ib in 50 ml Tetrahydrofuran vorgelegt. Man erhitzte das Gemisch unter Rückfluss (75 bis 80 °C) und tropfte innerhalb von 4 Stunden 20,4 g Tetramethylmethylendiamin in 75 ml Tetrahydrofuran zu und erhitzte weitere 2 Stunden unter Rückfluss. Die Lösung wurde filtriert und das Lösungsmittel im Vakuum entfernt: 105 g Öl (Mannichaddukt).
¹H-NMR: 7,1 ppm (Dublett, Feinaufspaltung, 1H), 6,9 ppm (Singulett, Feinaufspaltung, 1H), 6,7 ppm (Dublett, 1H), 3,6 ppm (Singulett, 2H), 2,25 ppm (Singulett, 6H), 1,75 ppm (Singulett, 2H), 2,2 ppm (Triplett, 4H), 2,1 ppm (Singulett, 12H), 1,75 ppm (Singulett, 2H), 1,5-0,5 ppm (Singuletts, 141H)

Diese spektroskopischen Daten entsprechen einem M_{N} des Alkylrests von 987.

### IIe. (nicht erfindungsgemäß)

In einem mit einem Wasserabscheider versehenen 0,5 1-Vierhalskolben wurden 119,4 g Polyisobutenphenol aus Beispiel Ic und 100 ml Toluol vorgelegt. Man gab 4,8 g Morpholin zu und tropfte unter Stickstoff als Schutzgas 4,5 g 37 %ige Formalinlösung zu. Anschließend wurde bis zum Rückfluss erhitzt und 3 Stunden lang bei kräftigem Rückfluss Wasser ausgekreist (destillativ entfernt). Anschließend wurde die Lösung filtriert und das Lösungsmittel im Vakuum entfernt: 106 g Öl (Mannichaddukt).
¹H-NMR: 7,1 ppm (Dublett, Feinaufspaltung, 1H), 6,9 ppm (Singulett, Feinaufspaltung 1H), 6,7. ppm (Dublett, 1H), 3,8 ppm (Multiplett, 4H), 3,7 (Multiplett, 2H), 2,5 ppm (Singulett, 4H), 1,75 ppm (Singulett, 2H), 1,5-0,5 ppm (Singuletts, 325H)

IIf.

In einem 1 1-Vierhalskolben mit Wasserabscheider wurden 350 g PIB-Phenol aus Beispiel Ib und 16 g Dimethylamin (40 ml 40 % wässrige Lösung) in 200 ml Toluol vorgelegt. Man tropfte bei 20 - 30 °C 29 ml 37 % wässrige Lösung von Formaldehyd zu und heizte auf Rückfluss. Nun wurde 3 h Wasser ausgekreist. Die Lösung wurde filtriert und das Lösungsmittel im Vakuum abgezogen: 355 g Öl.
¹H-NMR: 7,1 ppm (Dublett, Feinaufspaltung, 1H), 6,9 ppm (Singulett, Feinaufspaltung, 1H), 6,7 ppm (Dublett, 1H), 3,65 ppm (Singulett, 2H), 2,1 ppm (Singulett, 6H), 1,75 ppm (Singulett, 2H), 1,5-0,5 ppm (Singuletts, 138H)

### IIg. (nicht erfindungsgemäß)

In einem 1 1-Vierhalskolben wurden 151,7 g tert.-Butylamin vorgelegt und im Eisbad auf 20,4 °C abgekühlt. Innerhalb von 30 Minuten wurden 177,7 g 37 %ige Formaldehydlösung bei einer Temperatur im Bereich von 20,5 bis 24,9 °C zugetropft. Dann wurden 50 g KOH-Pastillen eingetragen und die entstandene Ölschicht abgetrennt. Das Öl wurde nochmals mit 50 g KOH-Pastillen behandelt, abgetrennt und filtriert. Man erhielt 145 g eines hellen Öls (N-tert.-Butylmethylenimin, das nach ¹H-NMR 20 % N,N',N"-Tri-tert.-butylhexahydrotriazin-1,3,5 enthielt).
¹H-NMR von tert.-Butylmethylenimin: 7,25 ppm (Quartett, 2H), 1,2 ppm (Singulett, 9H),
¹H-NMR von N,N',N"-Tri-tert.-butylhexahydrotriazin-1,3,5: 3,5 ppm (Singulett, 6H), 1,15 ppm (Singulett, 27H)

In einem 250 ml-Vierhalskolben wurden 108 g PIB-Phenol aus Beispiel Ib vorgelegt und 9,5 g tert.-Butylmethylenimin bei 25 °C zugetropft. Es wurde 3 Stunden bei 40 °C gerührt, mit 100 ml Hexan aufgenommen und 3-mal mit Methanol gewaschen. Die Lösungsmittel wurden bei 100 °C und 20 mbar abgezogen: 90 g Öl.
¹H-NMR: 7,1 ppm (Dublett, Feinaufspaltung, 1H), 6,9 ppm (Singulett, Feinaufspaltung, 1H), 6,7 ppm (Dublett, 1H), 3,95 ppm (Singulett, 2H), 1,75 ppm (Singulett, 2H), 1,2 ppm (Singulett, 9H), 1,5-0,5 ppm (Singuletts, 138H).

### IIh. (nicht erfindungsgemäß)

In einem 1 1-Vierhalskolben wurden 153 g N,N-Dimethylaminopropylamin vorgelegt und im Eisbad auf 20,4 °C abgekühlt. Innerhalb von 30 Minuten wurden 130 g 37 %ige Formaldehydlösung bei einer Temperatur im Bereich von 20 bis 25 °C zugetropft. Anschließend wurden 50 g KOH-Pastillen eingetragen und die entstandene Ölschicht abgetrennt. Das Öl wurde nochmals mit 50 g KOH-Pastillen behandelt, abgetrennt und filtriert. Man erhielt 145 g eines hellen Öls (N,N',N"-Tris(N,N-dimethylaminopropyl)hexahydrotriazin-1,3,5).
¹H-NMR von N,N',N"-Tris(N,N-dimethylaminopropyl)hexahydrotriazin-1,3,5: 3,3 ppm (Singulett, 6H), 2,4 ppm (Triplett, 6H), 2,25 ppm (Triplett, 6H), 2,2 ppm (Singulett, 18H), 1,6 ppm (Multiplett, 6H).

In einem 250 ml-Vierhalskolben wurden 110 g PIB-Phenol aus Beispiel Ib vorgelegt und 11,5 g N,N',N"-Tris(dimethylaminopropyl)hexahydrotriazin-1,3,5 bei 25 °C zugetropft. Es wurde 3 Stunden bei 80 °C gerührt, mit 100 ml Hexan aufgenommen und 3-mal mit Wasser gewaschen und mit Na₂SO₄ getrocknet. Das Lösungsmittel wurde bei 100 °C und 20 mbar abgezogen: 95 g Öl.
¹H-NMR: 7,1 ppm (Dublett, Feinaufspaltung, 1H), 6,9 ppm (Singulett, Feinaufspaltung, 1B), 6,7 ppm (Dublett, 1H), 3,9 ppm (Singulett, 2H), 2,4 ppm (Triplett, 2H), 2,25 ppm (Triplett, 2H), 2,2 ppm (Singulett, 6H), 1,75 ppm (Singulett, 2H), 1,2 ppm (Singulett, 9H), 1,6 ppm (Multiplett, 2H), 1,5-0,5 ppm (Singuletts, 138H).

Analog zur Herstellungsvorschrift aus Beispiel IIa wurden die Mannichaddukte der folgenden Tabelle 1 herstellt.

**Tabelle 1**

| Beispiele 1, 2, 3. 4, 5, 7, 15, 16 und 17 nicht erfindungsgemäß | | | | | | | |
|---|---|---|---|---|---|---|---|
| Beispiel Nr. | Mₙ Polyisobutenylrest | Amin | PIB-Phenol ¹¹⁾ | Amin | Formaldehyd | Ausbeute | δ Aminomethylenprotonen |
| | | | [mol] | [mol] | [mol] | [g] | [ppm] |
| 1 | 2300 | DMAPA ³⁾ | 0,05 | 0,055 | 0,055 | 115 | 3,9 |
| 2 | 2300 | NMPIP ⁴⁾ | 0,05 | 0,11 | 0,11 | 109 | 3,7 |
| 3 | 2300 | Morpholin | 0,05 | 0,055 | 0,055 | 106 | 3,7 |
| 4 ¹⁾ | 550 | DEOHA ⁵⁾ | 0,167 | 0,33 | 0,35 | 136 | 3,7 |
| 5 | 750 | DMAPA | 0,27 | 0,29 | 0,29 | 254 | 3,9 |
| 6 | 1300 | DMA. ⁶⁾ | 0,26 | 0,34 | 0,32 | 360 | 3,6 |
| 7 | 250 | DELTA ⁷⁾ | 0,43 | 1,03 | 0,95 | 260 | 3,9 + 3,75 |
| 8 | 550 | DMA | 0,39 | 0,5 | 0,47 | 266 | 3,6 |
| 9 | 700 | DMA | 0,44 | 0,57 | 0,53 | 369 | 3,6 |
| 10 | 1000 | DEA ⁸⁾ | 0,1 | 0,12 | 0,12 | 112 | 3,72 + 3,64 |
| 11 | 1000 | DPA ⁹⁾ | 0,1 | 0,12 | 0,12 | 113 | 3,77 |
| 12 ²⁾ | 1000 | DMA | 0,1 | 0,13 | 0,13 | 116 | 3,55 |
| 13 ²⁾ | 1000 | DEA | 0,084 | 0,11 | 0,11 | 89 | 3,68 |
| 14 ²⁾ | 1000 | DPA | 0,073 | 0,1 | 0,1 | 84 | 3,7 |
| 15 | 1000 | TMPDA 10) | 0,1 | 0,15 | 0,13 | 119 | 3,67 |
| 16 ¹⁾ | 1000 | DEOHA | 0,1 | 0,12 | 0,11 | 115 | 3,8 |
| 17 ¹⁾ | 1000 | DEOHA | 0,1 | 0,24 | 0,3 | 118 | 3,75 |
| 18 | 700 | DEOHA | 0,43 | 0,47 | 0,47 | 366 | 3,6 |
| 19 ¹⁾ | 224 | DEOHA | 0,25 | 0,8 | 0,9 | 166 | 3,7 |
| 20 ¹⁾ | 224 | DEOHA | 0,25 | 0,27 | 0,3 | 106 | 3,75 |
| 21 ¹⁾ | 2300 | DEOHA | 0,025 | 0,027 | 0,03 | 64 | 3,75 |
| 22 ¹⁾ | 2300 | DEOHA | 0,025 | 0,08 | 0,09 | 69 | 3,7 |

| | | | | | | | |
|---|---|---|---|---|---|---|---|
| ¹⁾ statt 37 %iger Formaldehydlösung wurde Paraformaldehyd eingesetzt ²⁾ statt 37 %iger Formaldehydlösung wurde 2-Methyl-4-polyisobutenylphenol eingesetzt ³⁾ 3-(Dimethylamino)-n-propylamin ⁴⁾ N-Methylpiperazin ⁵⁾ Diethanolamin ⁶⁾ Dimethylamin ⁷⁾ Diethylentriamin ⁸⁾ Diethylamin ⁹⁾ Dipropylamin ¹⁰⁾ Trimethylpropylendiamin ¹¹⁾ Polyisobutenylphenol | | | | | | | |

### Beispiele 18, 19, 20, 21 und 22 nicht erfindungsgemäß

### III. Prüfung der anwendungstechnischen Eigenschaften

Im Folgenden wurde als Schmierstoff jeweils Referenzöl RL 189/5 eingesetzt.

### IIIa.

In einem Opel Kadett-Motor wurde die Einlassventilsauberkeit gemäß CEC-Methode F-05-A-93 getestet. Hierfür wurde ein marktüblicher Eurosuper-Grundkraftstoff gemäß EN 228 eingesetzt, welchem entweder kein Kraftstoffadditiv (Vergleichsbeispiel 1) oder nicht erfindungsgemäße Kraftstoffadditive auf Basis von Mannichaddukten (Vergleichsbeispiel 2) oder ein erfindungsgemäßes Polyisobutenphenol-haltiges Mannichaddukt zugesetzt wurde (Beispiel 1).

Das nicht erfindungsgemäße Kraftstoffadditiv aus Vergleichsbeispiel 2 wurde gemäß Vergleichsbeispiel 2 der EP-A-0 831 141 hergestellt.

Das erfindungsgemäße Polyisobutenphenol-haltige Mannichaddukt von Beispiel B1 wurde gemäß Ia und IIc hergestellt.

Das erfindungsgemäße Polyisobutenphenol-haltige Mannichaddukt von Beispiel B2 wurde gemäß Ib und IIf hergestellt.

Die wichtigsten Parameter, die Dosierung und die anwendungstechnischen Ergebnisse sind in Tabelle 2 zusammengefasst.

**Tabelle 2**

| | M_{N}¹⁾ | Amin | Dosierung [mg/kg] | Ventilablagerungen [mg/Ventil] | | | | Mittelwert ²⁾ |
|---|---|---|---|---|---|---|---|---|
| | | | | 1 | 2 | 3 | 4 | |
| VB1 | - | - | - | 450 | 188 | 316 | 366 | 330 |
| VB2 | 1000 | EDA 3) | 400 | 9 | 127 | 7 | 193 | 84 |
| B1 | 550 | DMAPA 4) | 400 | 0 | 1 | 0 | 0 | 0,25 |
| B2 | 1000 | DMA 5) | 300 | 0 | 0 | 0 | 0 | 0 |

| | | | | | | | | |
|---|---|---|---|---|---|---|---|---|
| Zahlenmittleres Molekulargewicht des Polyisobutenylrests ²⁾ Mittelwert der Ablagerungen aus den vier Ventilen ³⁾ Ethylendiamin ⁴⁾ 3-(Dimethylamino)-n-propylamin ⁵⁾ Dimethylamin | | | | | | | | |

### Beispiel B1 nicht erfindungsgemäß

### IIIb.

In einem Opel Kadett-Motor wurde die Einlassventilsauberkeit gemäß CEC-Methode F-04-A-87 getestet. Hierfür wurde ein marktüblicher Eurosuper-Grundkraftstoff gemäß EN 228 eingesetzt, welchem entweder kein Kraftstoffadditiv (Vergleichsbeispiel 3), ein nicht erfindungsgemäßes Kraftstoffadditiv auf Basis eines Polyisobutenylamins, erhältlich durch Hydroformylierung und anschließende reduktive Aminierung eines Polyisobutens (Vergleichsbeispiel 4) oder Polyisobutenphenol-haltige Mannichaddukte zugesetzt wurden (Beispiele 3 und 4). Das Additiv wurde als 50 gew.-%ige Lösung in einem C₁₀-C₁₃-Paraffin eingesetzt

Einige Parameter der eingesetzten Additive, die Dosierung und die anwendungstechnischen Ergebnisse sind in der Tabelle 3 zusammengefasst.

**Tabelle 3**

| Beispiel Nr. | Mₙ ¹⁾ | Amin | Dosierung [mg/kg] | Δ IVD ²⁾[mg/Ventil] |
|---|---|---|---|---|
| VB3 | - | - | 300 | 442 |
| VB4 | 1000 | NH₃ | 300 | 75 |
| 3 | 1000 | DMAPA ³⁾ | 300 | 3 |
| 4 | 1000 | DMA ⁴⁾ | 300 | 2 |

| | | | | |
|---|---|---|---|---|
| ¹⁾ zahlenmittleres Molekulargewicht des Polyisobutenylrests ²⁾ IVD = intake valve deposits; Mittelwert der Ablagerungen aller Ventile ³⁾ 3-(Dimethylamino)-n-propylamin ⁴⁾ Dimethylamin | | | | |

### Beispiel 3 nicht erfindungsgemäß

### IIIc. (nicht erfindungsgemäß)

In einem Mercedes Benz M 102 E-Motor wurde die Einlassventilsauberkeit gemäß CEC-Methode F-05-A-93 getestet. Hierfür wurde ein marktüblicher Eurosuper-Grundkraftstoff gemäß EN 228 eingesetzt, welchem entweder kein Kraftstoffadditiv (Vergleichsbeispiel 5) oder ein Kraftstoffadditivgemisch aus 41 Gew.-% eines synthetischen Trägeröls (auf Basis eines polybutoxylierten Fettalkohols) und 59 Gew.-% eines nicht erfindungsgemäßen (Vergleichsbeispiel 6) oder eines Polyisobutenphenol-haltigen Mannichaddukts (Beispiel 5) zugesetzt wurde. Die Mannichaddukte wurden als 50 gew.-%ige Lösung in einem C₁₀-C₁₃-Paraffin eingesetzt.

Als nicht erfindungsgemäßes Kraftstoffadditiv wurde ein Polyisobutenylphenol-haltiges Mannichaddukt auf Basis eines konventionellen Polyisobutens, Phenol und Dimethylaminopropylamin eingesetzt.

Die wesentlichen Parameter, die Dosierung und die anwendungstechnischen Ergebnisse sind in Tabelle 4 zusammengefasst.

**Tabelle 4**

| Beispiel Nr. | Mₙ¹⁾ | Amin | Dosierung [mg/kg] | Δ IVD ²⁾[mg/Ventil] |
|---|---|---|---|---|
| VB5 | - | - | 600 | 298 |
| VB6 | 1000 | DMAPA ³⁾ | 600 | 194 |
| 5 | 1000 | DMAPA | 600 | 53 |

| | | | | |
|---|---|---|---|---|
| ¹⁾ zahlenmittleres Molekulargewicht den Polyisobutenylrests ²⁾ IVD = intake valve deposits; Mittelwert der Ablagerungen aller Ventile ³⁾ 3-(Dimethylamino)-n-propylamin | | | | |

### IIId.

In einem Mercedes Benz M 102 E-Motor wurde die Einlassventilsauberkeit gemäß CEC-Methode F-05-A-93 getestet. Hierfür wurde ein marktüblicher Eurosuper-Grundkraftstoff gemäß EN 228 eingesetzt, welchem entweder kein Kraftstoffadditiv (Vergleichsbeispiel 7) oder ein Kraftstoffadditivgemisch aus 40 Gew.-% eines synthetischen Trägeröls (auf Basis eines polybutoxylierten Fettalkohols) und 60 Gew.-% eines nicht erfindungsgemäßen (Vergleichsbeispiel 8) oder eines erfindungsgemäßen Polyisobutenphenol-haltigen Mannichaddukts (Beispiele 6 bis 12) zugesetzt wurde. Die Mannichaddukte wurden als 50 gew.-%ige Lösung in einem C₁₀-C₁₃-Paraffin eingesetzt.

Als nicht erfindungsgemäßes Kraftstoffadditiv wurde ein Polyisobutenylamin; erhältlich durch Hydroformylierung und anschließende reduktive Aminierung eines Polyisobutens eingesetzt.

Die wesentlichen Parameter, die Dosierung und die anwendungstechnischen Ergebnisse sind in Tabelle 5 wiedergegeben.

**Tabelle 5**

| Beispiel Nr. | Mₙ¹⁾ | Eduktgehalt [Gew.-%] | Gehalt Bis (aminomethyl) derivat [Gew.-%] | Amin | Dosierung [mg/kg] | Δ IVD²⁾ [mg/ Ventil] |
|---|---|---|---|---|---|---|
| VB7 | - | - | - | - | 400 | 277 |
| VB8 | 1000 | - | - | NH₃ | 400 | 27 |
| 6 | 1000 | 4 | 2 | DMA ³⁾ | 400 | 8 |
| 7 | 1000 | 1 | 3 | DMA | 400 | 13 |
| 8 | 1000 | 9 | 0 | DMA | 400 | 1 |
| 9 | 1000 | 0 | 24 | DMA | 400 | 16 |
| 10 | 1000 | - | - | DPA ⁴⁾ | 400 | 9 |
| 11 | 1000 | - | - | DEA ⁵⁾ | 400 | 10 |
| 12⁶⁾ | 1000 | - | - | DMA | 400 | 14 |

| | | | | | | |
|---|---|---|---|---|---|---|
| ¹⁾ zahlenmittleres Molekulargewicht des Polyisobutenylrests ²⁾ IVD = intake valve deposits: Mittelwert der Ablagerungen aller Ventile ³⁾ Dimethylamin ⁴⁾ Dipropylamin ⁵⁾ Diethylamin ⁶⁾ zur Aminoalkylierung wurde Kresol anstelle von Phenol eingesetzt | | | | | | |

### IIIe.

In einem Mercedes Benz M 102 E-Motor wurde die Einlassventilsauberkeit gemäß CEC-Methode F-05-A-93 getestet. Hierfür wurde ein marktüblicher Eurosuper-Grundkraftstoff gemäß EN 228 eingesetzt, welchem entweder kein Kraftstoffadditiv (Vergleichsbeispiel 9) oder ein Kraftstoffadditivgemisch aus 40 Gew.-% eines synthetischen Trägeröls (auf Basis eines propoxylierten Fettalkohols) und 60 Gew.-% eines nicht erfindungsgemäßen Kraftstoffadditivs (Vergleichsbeispiel 10) oder eines erfindungsgemäßen Polyisobutenphenol-haltigen Mannichaddukts (Beispiel 13) zugesetzt wurde. Die Kraftstoffadditive wurden als 50 gew.-%ige Lösung in einem C₁₀-C₁₃-Paraffin eingesetzt.

Als nicht erfindungsgemäßes Kraftstoffadditiv wurde ein Polyisobutenylamin, erhältlich durch Hydroformylierung und anschließende reduktive Aminierung eines Polyisobutens eingesetzt.

Die wesentlichen Parameter, die Dosierung und die anwendungstechnischen Ergebnisse sind in Tabelle 6 wiedergegeben.

**Tabelle 6**

| Beispiel Nr. | Mₙ ¹⁾ | Amin | Dosierung [mg/kg] | Δ IVD ²⁾[mg/Ventil] |
|---|---|---|---|---|
| VB9 | - | - | 325 | 304 |
| VB10 | 1000 | NH₃ | 325 | 5 |
| 13 | 1000 | 1 DMA ³⁾ | 325 | 3 |

| | | | | |
|---|---|---|---|---|
| ¹⁾ zahlenmittleres Molekulargewicht des Polyisobutenylrests ²⁾ IVD = intake valvo deposits; Midelwert der Ablagerungen aller Ventile ³⁾ Dimethylamin | | | | |

## Patentansprüche

1. Verfahren zur Herstellung Polyisobutenphenol-haltiger Mannichaddukte durch
a) Alkylierung eines Phenols mit Polyisobuten, das einen Anteil an Vinyliden-Doppelbindungen von größer 70 Mol-% und ein zahlenmittleres Molekulargewicht von 300 bis 3000 aufweist, bei einer Temperatur unterhalb von etwa 50 °C in Gegenwart eines Alkylierungskatalysators;
b) Umsetzung des Reaktionsproduktes aus a) mit Formaldehyd, einem Oligomer oder einem Polymer des Formaldehyds und wenigstens einem Amin HNR⁴R⁵, wobei die Reste R⁴ und R⁵ für Methyl, Ethyl, n-Propyl, Isopropyl, n-Butyl, iso-Butyl, sek.-Butyl, tert.-Butyl, n-Pentyl oder n-Hexyl stehen,
ausgenommen ein Verfahren, bei dem man in Schritt a) folgendermaßen vorgeht:
Phenol (203,2 g, 2.16 mol) wird bei 40 °C geschmolzen und in einem 5 I Rundkolben zu Bortrifluoridetherat (73.5 ml, 0.60 mol) gegeben. Ein Polyisobuten mit einem zahlenmittleren Molekulargewicht von etwa 950 und einem Methylvinylidengehalt von etwa 82 % (1040 g, 1.09 mol) wird in Hexan (1863 ml) gelöst und die Lösung wird in den Phenol enthaltenden Kolben über einen Tropfrichter mit Druckausgleich innerhalb von 3 Stunden mit einer solchen Geschwindigkeit gegeben, dass die Temperatur des Reaktionsgemischs 22 bis 27 °C beträgt. Die Lösung wird weitere 16 Stunden bei Raumtemperatur geführt, bevor Ammoniak (400 ml einer 30 gew.%igen wässrigen Lösung, 2.88 mol) zugegeben wird. Wasser (1000 ml) wird hinzugefügt und das Gemisch wird gerührt. Die Lösung wird in einem 5 l Scheidetrichter in eine organische und eine wässrige Phase getrennt. Die wässrige Phase wird mit Hexan extrahiert. Es werden vier Extraktionsschritte mit jeweils 500 ml Hexan durchgeführt. Die organischen Phasen der vier Extraktionsschritte werden kombiniert und über MgSO₄ über Nacht getrocknet und dann über eine 12 mm Celite-Schicht filtriert. Das Lösungsmittel wird bei 80 °C/23" Hg vom Filtrat am Rotationsverdampfer entfernt;
und bei dem das Amin Dimethylamin, N-methyl-ethylamin oder Dibutylamin ist.

2. Verfahren nach Anspruch 1, wobei man als Amin Dimethylamin, Diethylamin oder Di-n-propylamin einsetzt.

3. Verfahren nach einem der vorhergehenden Ansprüche, wobei man ein Mannichaddukt mit einer Polydispersität im Bereich von 1.1 bis 3.5 erhält.

4. Verfahren nach einem der Ansprüche 1 bis 3, wobei man das Reaktionsgemisch aus b) durch Säulenchromatographie an einer sauren stationären Phase durch mehrstufiges Eluieren mit
- wenigstens einem Kohlenwasserstoff und anschließend
- wenigstens einem basischen Alkohol-Wasser-Gemisch
fraktioniert.

5. Verfahren nach Anspruch 4, wobei man als basisches Alkohol-Wasser-Gemisch ein Gemisch aus
a) 75 bis 99,5 Gew.-% wenigstens eines C₂- bis C₄-Alkohols,
b) 0,4 bis 24,4 Gew.-% Wasser und
c) 0,1 bis 15 Gew.-% wenigstens eines bei Raumtemperatur flüchtigen Amins
einsetzt.

6. Verfahren nach einem der vorhergehenden Ansprüche, wobei man ein Adduktgemisch erhält, das 0 bis 20 Mol-%, bevorzugt 1 bis 15 Mol-%, nicht weiter umgesetzte Polyisobutenylphenole aus Reaktionsschritt a) enthält.

## Claims

1. A process for the preparation of polyisobutenylphenol-containing Mannich adducts by
a) alkylation of a phenol with polyisobutene having more than 70 mol% of vinylidene double bonds and a number average molecular weight of from 300 to 3000 at below about 50°C in the presence of an alkylation catalyst;
b) reaction of the reaction product from a) with formaldehyde, an oligomer or a polymer of formaldehyde and at least one amine HNR⁴R⁵, where the R⁴ and R⁵ radicals are methyl, ethyl, n-propyl, isopropyl, n-butyl, isobutyl, sec-butyl, tert-butyl, n-pentyl or n-hexyl,
excluding a process in which the procedure in step a) is as follows:
phenol (203.2 g, 2.16 mol) is melted at 40°C and added to boron trifluoride etherate (73.5 ml, 0.60 mol) in a 5 1 round-bottom flask. A polyisobutene having a number-average molecular weight of about 950 and a methyl-vinylidene content of about 82% (1040 g, 1.09 mol) is dissolved in hexane (1863 ml), and the solution is added to the phenol-comprising flask through a pressure-equalized dropping funnel within three hours at such a rate that the temperature of the reaction mixture is 22 to 27°C. The solution is stirred at room temperature for a further 16 hours, before ammonia (400 ml of a 30% by weight aqueous solution, 2.88 mol) is added. Water (1000 ml) is added and the mixture is stirred. The solution is separated into an organic phase and an aqueous phase in a 5 1 separating funnel. The aqueous phase is extracted with hexane. Four extraction steps are conducted, each with 500 ml of hexane. The organic phases from the four extraction steps are combined and dried over MgSO₄ overnight and then filtered through a 12 mm Celite layer. The solvent is removed from the filtrate on a rotary evaporator at 80°C/23" Hg;
and the amine is dimethylamine, N-methylethylamine or dibutylamine.

2. The process according to claim 1, wherein the amine used is dimethylamine, diethylamine or di-n-propylamine.

3. The process according to either of the preceding claims, wherein a Mannich adduct having a polydispersity of from 1.1 to 3.5 is obtained.

4. The process according to any of claims 1 to 3, wherein the reaction mixture from b) is fractionated by column chromatography over an acidic stationary phase by multistage elution with
- at least one hydrocarbon and then
- at least one basic alcohol/water mixture.

5. The process according to claim 4, wherein the basic alcohol/water mixture used is a mixture of
a) from 75 to 99.5% by weight of at least one C₂-to C₄-alcohol,
b) from 0.4 to 24.4% by weight of water and
c) from 0.1 to 15% by weight of at least one amine which is volatile at room temperature.

6. The process according to any of the preceding claims, wherein the adduct mixture obtained comprises from 0 to 20, preferably 1 to 15, mol% of polyisobutenylphenols from reaction step a) which are not reacted further.

## Revendications

1. Procédé de préparation de produits d'addition de Mannich contenant du polyisobutènephénol, par :
a) alkylation d'un phénol avec du polyisobutène, qui présente une quantité de doubles liaisons de vinylidène supérieure à 70 % en moles et un poids moléculaire moyen en nombre allant de 300 à 3000, à une température inférieure à 50 °C en présence d'un catalyseur d'alkylation ;
b) transformation du produit de réaction de a) avec du formaldéhyde, un oligomère ou un polymère de formaldéhyde, et au moins une amine HNR⁴R⁵, les radicaux R⁴ et R⁵ représentant méthyle, éthyle, n-propyle, isopropyle, n-butyle, isobutyle, sec-butyle, tert-butyle, n-pentyle ou n-hexyle,
à l'exception d'un procédé dans lequel on procède comme suit dans l'étape a) :
du phénol (203,2 g, 2,16 moles) est fondu à 40°C et ajouté, dans un ballon à fond rond de 5 1, à de l'éthérate de borotrifluorure (73,5 ml, 0,60 mole). Un polyisobutène présentant un poids moléculaire moyen en nombre d'environ 950 et une teneur en méthylvinylidène d'environ 82 % (1040 g, 1,09 mole) est dissous dans de l'hexane (1863 mm) et la solution est ajoutée dans le ballon contenant le phénol, via un entonnoir à robinet avec compensation de pression, en 3 heures à une vitesse telle que la température du mélange réactionnel est de 22 à 27°C. La solution est agité pendant 16 heures supplémentaires à température ambiante, avant l'addition d'ammoniaque (400 ml d'une solution aqueuse à 30 % en poids, 2,88 moles). On ajoute de l'eau (1000 ml) et le mélange est agité. La solution est séparée dans un entonnoir de séparation de 5 1 en une phase organique et une phase aqueuse. La phase aqueuse est extraite avec de l'hexane. On réalise quatre étapes d'extraction avec à chaque fois 500 ml d'hexane. Les phases organiques des quatre étapes d'extraction sont combinées et séchées sur du MgSO₄ pendant une nuit et ensuite filtrées sur une couche de Célite de 12 mm. Le solvant est séparé du filtrat à 80°C/23" de Hg sur un évaporateur rotatif ;
et dans lequel l'amine est la diméthylamine, la N-méthyl-éthylamine ou la dibutylamine.

2. Procédé selon la revendication 1, où l'on met en oeuvre comme amine la diméthylamine, la diéthylamine ou la di-n-propylamine.

3. Procédé selon l'une quelconque des revendications précédentes, où l'on obtient un produit d'addition de Mannich avec une polydispersité située dans l'intervalle allant de 1,1 à 3,5.

4. Procédé selon l'une quelconque des revendications 1 à 3, où l'on fractionne le mélange réactionnel de b) par chromatographie sur colonne sur une phase stationnaire acide, par élution en plusieurs étapes, avec
- au moins un hydrocarbure, et ensuite
- au moins un mélange alcool-eau basique.

5. Procédé selon la revendication 4, où l'on met en oeuvre comme mélange alcool-eau basique, un mélange de
a) 75 à 99,5 % en poids d'au moins un alcool en C₂ à C₄,
b) 0,4 à 24,4 % en poids d'eau, et
c) 0,1 à 15 % en poids d'au moins une amine volatile à la température ambiante.

6. Procédé selon l'une quelconque des revendications précédentes, où l'on obtient un mélange d'adduit, qui contient 0 à 20 % en moles, de préférence 1 à 15 % en moles, de polyisobuténylphénol n'ayant plus réagi, de l'étape de réaction a).
